# EUROPEAN PATENT APPLICATION

(11) **EP 2 692 904 A1**
(43) Date of publication of application: **05.02.2014**
(21) Application number: 12764267.6
(22) Date of filing: 28.03.2012
(51) Int. Cl.: C25D 1/04

(54) **ELECTROLYTIC COPPER FOIL AND METHOD FOR PRODUCING ELECTROLYTIC COPPER FOIL**

(30) Priority: 30.03.2011 JP 2011076638
(71) Applicant: JX Nippon Mining & Metals Corporation, Tokyo 100-8164 (JP)
(72) Inventor: KOHIKI,Michiya, Hitachi-shi Ibaraki 317-0056 (JP)
(74) Representative: Yeadon, Mark
(86) International application number: PCT/JP2012/058202
(87) International publication number: WO 2012/133565

(57) **Abstract**

The present invention provides an electrolytic copper foil that has a high normal tensile strength, a low decrease in tensile strength after a thermal history, and a low concentration of impurities in the copper foil and a method for producing the copper foil. Specifically, the electrolytic copper foil in which a sulfur concentration of the copper foil is not less than 10 ppm by mass but no more than 50 ppm by mass, wherein when lattices with a spacing of 10 nm in a STEM image observed with a scanning transmission electron microscope at a magnification of 1 million times are formed and intersections of each lattice are used as a measurement point for determining a sulfur concentration, there is a measurement point at which the sulfur concentration is higher as compared to the sulfur concentration of the copper foil.

## Description

### TECHNICAL FIELD

The present invention relates to an electrolytic copper foil, particularly to an electrolytic copper foil applicable to an anode current collector for a secondary battery and to a production method of an electrolytic copper foil.

### BACKGROUND ART

As an electrolytic copper foil used for an anode of a secondary lithium ion battery, a material possessing high strength and resisting reduction of tensile strength after heat treatment has been desired because of various demands such as increase of energy density, high tolerance in charging and discharging cycles, heat treatment in application of an active material, and use of a high energy radiation curable binder. An electrolytic copper foil which is high in copper purity and low in the content of impurities has been desired because of use for a storage medium of electrons.

For example, Japanese Patent Publication No. 38050155 (Patent Literature 1) describes an example of an electrolytic copper foil with low content of impurities and high tensile strength in normal conditions intended for an improvement of tensile strength and elongation at ambient temperature and after heating. Japanese Patent Application Laid-Open No. 2008-101267 (Patent Literature 2) and No. 2009-2999100 (Patent Literature 3) disclose an example of an electrolytic copper foil with high tensile strength in normal conditions and less reduction of tensile strength after a heat history since bending properties are well maintained after heating.

### [Citation List]

### [Patent Literature]

Patent Literature 1: Japanese Patent Publication No. 38050155
Patent Literature 2: Japanese Patent Application Laid-Open No. 2008-101267
Patent Literature 3: Japanese Patent Application Laid-Open No. 2009-299100

### SUMMARY OF INVENTION

### [Problem to be solved by the present invention]

However, the electrolytic copper foil according to Patent Literature 1 has such a problem as while a content of impurities in the copper foil is low and tensile strength in normal conditions is high, tensile strength is substantially reduced after a heat history, and insufficient for the characteristics required for a copper foil used in an anode of a secondary battery. The electrolytic copper foil according to Patent Literatures 2 and 3 also has high tensile strength in normal conditions and shows little reduction in tensile strength after a heat history, but is still insufficient for the characteristics required for a copper foil used in an anode of a secondary battery since the concentration of impurities in a copper foil is high.

The present invention, in view of the problems, provides an electrolytic copper foil which is high in tensile strength in normal conditions, little in reduction of tensile strength after a heat history, and low in the content of impurities in a copper foil and a production method of an electrolytic copper foil.

### [Means for solving the problem]

To solve the above-mentioned problems, the present inventors extensively investigated and as the results, found that an electrolytic copper foil, which is high in high strength and little in reduction of tensile strength after a heat history can be obtained by containing an appropriate amount of sulfur in a copper foil and selectively depositing sulfur at grain boundary and within grains.

One aspect of the present invention which was completed based on such a findings inheres in an electrolytic copper foil in which a sulfur concentration of the copper foil is not less than 10 ppm by mass but no more than 50 ppm by mass, wherein when lattices with a spacing of 10 nm in a STEM image observed with a scanning transmission electron microscope at a magnification of 1 million times are formed and intersections of each lattice are used as a measurement point for determining a sulfur concentration, there is a measurement point at which the sulfur concentration is higher as compared to the sulfur concentration of the copper foil.

Another aspect of the present invention inheres in an electrolytic copper foil in which a sulfur concentration of the copper foil is not less than 10 ppm by mass but no more than 50 ppm by mass, wherein when lattices with a spacing of 10 nm in a STEM image observed with a scanning transmission electron microscope at a magnification of 1 million times are formed and intersections of each lattice are used as a measurement point for determining a sulfur concentration, there is a measurement point at which the sulfur concentration is not less than 10 times as compared to the sulfur concentration of the copper foil.

In one embodiment, the electrolytic copper foil according to the present invention has a tensile strength in normal conditions not less than 50 kgf/mm² and retains tensile strength not less than 90% of tensile strength in normal conditions after heated at 250°C for 30 minutes.

In another embodiment, an electrolytic copper foil according to the present invention has an elongation not less than 5.0%.

Further, in another embodiment, an electrolytic copper foil according to the present invention includes a copper foil used for an anode current collector of a secondary battery.

Still another aspect of the present invention inheres in a method of producing the electrolytic copper foil, the method including using an electrolyte containing 2 to 5 ppm by mass of a glue and whose sulfur concentration is adjusted so that sulfur concentration in the copper foil is not less than 10 ppm by mass but no more than 50 ppm by mass and electrolyzing the electrolyte at an electrolytic temperature between 60 and 65°C and a current density between 60 and 120 A/dm².

The present invention can provide an electrolytic copper foil with high tensile strength in normal conditions, little reduction of tensile strength after a heat history, and high elongation and a production method of an electrolytic copper foil.

### DESCRIPTION OF EMBODIMENTS

An electrolytic copper foil according to an embodiment of the present invention includes an electrolytic copper foil, in which a sulfur concentration is not less than 10 ppm by mass but no more than 50 ppm by mass, and when lattices with a spacing of 10 nm in a STEM image observed with a scanning transmission electron microscope at a magnification of 1 million times are formed and intersections of each lattice are used as a measurement point for determining a sulfur concentration, there is a measurement point at which the sulfur concentration is higher as compared to the sulfur concentration in the copper foil.

The electrolytic copper foil which has high strength and is prevented from reducing tensile strength after heated at 250°C for 30 minutes can be obtained by adjusting the concentration of impurities, particularly the sulfur concentration in the copper foil to an appropriate range and selectively depositing impurities in high concentration at a boundary and within grains.

As examples of impurities, sulfur, nitrogen, and chlorine may be contained in the copper foil. In the electrolytic copper foil according to the embodiment of the present invention, a high-strength electrolytic copper foil can be obtained by adjusting sulfur concentration in the copper foil to an appropriate range. However, when the sulfur concentration is too high, this potentially leads to reduction of elongation, which is important for determining the characteristics of a secondary lithium ion battery. Therefore, the sulfur concentration in the copper foil may be adjusted to no more than 50 ppm by mass, preferably to no more than 40 ppm by mass. On the other hand, when the sulfur concentration is too low, this potentially results in poor effects on enhancing strength, so that a lower limit of the sulfur concentration is, for example, not less than 10 ppm by mass, preferably not less than 15 ppm by mass. The nitrogen concentration in the copper foil is preferably no more than 20 ppm by mass, and the chlorine concentration in the copper foil is preferably no more than 10 ppm by mass.

The sulfur concentration and the concentration of other impurities in the copper foil are determined by combustion analysis of the electrolytic copper foil according to the embodiment of the present invention. Specifically, the nitrogen concentration is determined by an inert gas fusion thermal conductivity method with TC-436 (made by LECO Corp.), the sulfur concentration is determined by a combustion infrared absorption spectrometry with CS-400 (made by LECO Corp.), and the chlorine concentration is determined by an ion chromatography of hot water hydrolysate with DX-500 (made by Nippon Dionex KK).

The electrolytic copper foil according to the embodiment of the present invention has the following characteristics when observed with a scanning transmission electron microscope (STEM) at a magnification of 1 million times. That is, when the electrolytic copper foil is processed using focused ion beam (FIB)in the thickness direction of the copper foil to form a thin sample (thickness: approximately 0.1 µm, width: 30 µm, and length: thickness of copper foil) as a test specimen for observation with STEM, and a STEM image obtained by STEM at the magnification of 1 million times is defined by drawing a straight line in both x-axis and y-axis directions at the spacing of 10 nm to form lattices, and intersections of lattices are used as a measurement point for determining the concentration of impurities, there are measurement points at which the concentration of impurities is higher than the sulfur concentration in the copper foil. The "sulfur concentration in the copper foil" is the sulfur concentration determined in analysis of a vaporized gas when a copper foil is combusted.

In other word, the electrolytic copper foil according to the embodiment of the present invention is the electrolytic copper foil, in which the sulfur concentration in the copper foil is not less than 10 ppm by mass but no more than 50 ppm by mass, and when lattices with the spacing thereof of 10 nm in a STEM image observed with a scanning transmission electron microscope at the magnification of 1 million times are formed and intersections of each lattice are used as a measurement point for determining the concentration of impurities, there are measurement points at which sulfur concentration is not less than 10 times, preferably not less than 25 times, further preferably not less than 50 times as compared to the sulfur concentration in the copper foil.

The electrolytic copper foil according to the presentment invention is provided with a structure in which impurities are selectively deposited in relatively high concentration at a boundary and within grains, herewith allowing for retaining strength required for a current collector while suppressing reduction of strength when an electrolytic copper foil is heated. The electrolytic copper foil according to the present invention is provided with a structure, in which impurities are selectively deposited in relatively high concentration at a boundary and within grains, yielding an electrolytic copper foil with higher strength as well as excellent elongation as compared to a conventional electrolytic copper foil, so that an electrolytic copper foil material more suitable for an anode current collector of a secondary battery can be obtained.

Measurement with the STEM can be carried out with JEM-2100F manufactured by JEOL Ltd.

The electrolytic copper foil according to the embodiment of the present invention provided with the above characteristics exhibits high tensile strength in normal conditions at not less than 50 kgf/mm², preferably from 50 to 70 kgf/mm² and retains not less than 90% of tensile strength in normal conditions after heating at 250°C for 30 minutes. This provides the electrolytic copper foil excellent in processability in pressing and slitting. "Tensile strength" in the present invention refers to a value determined in the tensile strength test according to IPC-TM-650, and "tensile strength in normal conditions" refers to a value determined in normal condition (23°C) in the tensile strength test according to IPC-TM-650.

When elongation of the electrolytic copper foil according to the embodiment of the present invention is determined according to IPC-TM-650, for example, using the copper foil with thickness of 10 µm, elongation is not less than 5.0%, more specifically from 5.0 to 10.0%, further more specifically from 5.0 to 8.0%. The electrolytic copper foil with well-balance characteristics of strength and elongation can be obtained.

The electrolytic copper foil according to an embodiment of the present invention has smaller surface roughness R_{z} as compared to a conventional electrolytic copper foil, and the surface roughness R_{z} is no more than 2.0 µm, further no more than 1.8 µm, further from 0.6 to 1.7 µm. "Surface roughness R_{z}" is a value determined by a surface roughness test according to JIS B-0601. This improves adhesion to an anti-rust layer applied to the surface of an electrolytic copper foil and gives better handling properties of a product as the electrolytic copper foil.

When the electrolytic copper foil according to the embodiment of the present invention is produced, an electrolyte in which 2 to 5 ppm by mass of a glue is contained and the sulfur concentration in the copper foil is adjusted to not less than 10 ppm by mass but no more than 50 ppm by mass is used, and electrolyzed at the electrolytic temperature of from 60 to 65°C and the current density of from 60 to 120 A/dm². More specifically, the electrolytic copper foil can be produced using an electrolytic copper foil production equipment, of which a rotating drum made of titanium or stainless steel with a diameter of approximately 3,000 mm and a width of approximately 2, 500 mm and electrodes disposed around the drum and spaced in a range of 3 to 10 mm apart are configured in an electrolytic bath. The equipment is an example for production and specifications of the equipment are not particularly limited.

In the electrolytic bath, 2.0 to 10.0 ppm by mass of the glue is added to a sulfuric acid-based electrolyte with the copper concentration of from 80 to 110 g/L and the sulfuric acid concentration of from 70 to 110 g/L.

The linear speed, electrolyte temperature, and current density are adjusted to from 1.5 to 5.0 m/s, from 60 to 65°C, and from 60 to 120 A/dm², respectively, to deposit copper on the surface of the rotating drum, from which copper is pealed to continuously produce the electrolytic copper foil. In the process, the conditions in which the electrolyte temperature is maintained at 60 to 65°C and electrolysis is carried out at the current density of 60 to 120 A/m² are suitable for yielding the electrolytic copper foil with the characteristics, and adjustment of the electrolyte temperature is particularly critical.

The surface or backside and further both sides of the electrolytic copper foil may be preferably subjected to the anti-rust treatment. The anti-rust treatment is the surface film formation with chromium oxide alone or with a mixture of chromium oxide and zinc/zinc oxide. The surface film formation with a mixture of chromium oxide and zinc/zinc oxide is the treatment, in which the electrolytic copper foil is covered with an anti-rust layer of a mixture of zinc-chromium layer containing zinc or zinc oxide and chromium oxide by electroplating of a plating solution containing a zinc salt or zinc oxide and a chromium salt.

A plating solution used typically includes an aqueous solution mixing at least one type of bichromates such as K₂Cr₂O₇, Na₂Cr₂O₇ and CrO₃, an alkali hydroxide, and an acid. An aqueous solution of mixing the aqueous solution with a water soluble zinc salt, for example, at least one kind of ZnO, ZnSO₄, and ZnSO₄.7H₂O can also be used.

Surface roughening can be carried out as needed before the anti-rust treatment. Abrasive particles can be formed by plating of one kind of copper, cobalt, and nickel or alloy plating of two kinds or more thereof. Typically, the abrasive particles can be formed by alloy plating of the copper, cobalt, and nickel. Further, to improve heat resistance and weathering properties (anti-rust), the copper foil for an anode current collector of a secondary battery is preferably treated to form, on a roughened surface of both sides, not less than one type of anti-rust treatment layers or heat resistant layers selected from the group of a cobalt-nickel alloy plating layer, a zinc-nickel alloy plating layer, and a chromate layer and/or a silane coupling layer.

Silane treatment of which a silane coupling agent is applied to both sides or a deposited surface of an anti-rust layer may be carried out as needed in order to improve adhesion of an active material to a copper foil. Examples of the silane coupling agent used in silane treatment include olefin-type silanes, epoxy-type silanes, acryl-type silanes, amino-type silanes, and mercapto-type silanes, and the silanes thereof can be appropriately selected for use. As a coating method, any one of spray coating, coating with a coater, immersion, and flow coating can be used.

### [Examples]

Examples of the present invention will be described below, but following examples are not construed to limit the present invention.

### (Example 1)

In an electrolytic bath were placed a rotating drum made of titanium with the diameter of approximately 3, 133 mm and the width of 2,476.5 mm and electrodes disposed around the drum and spaced in a range of 5 mm apart. Into the electrolytic bath were introduced copper with the concentration of 90 g/L, sulfuric acid with the concentration of 80 g/L and a glue with the concentration of 3 ppm by mass to form an electrolyte. Then, the electrolyte temperature and a current density were adjusted to 60°C and 85 A/dm², respectively, to deposit copper on the surface of the rotating drum, from which copper was pealed to continuously produce an electrolytic copper foil with the thickness of 10 µm.

### (Comparative Example 1)

In the electrolytic bath were placed the rotating drum made of titanium with the diameter of approximately 3,133 mm and the width of 2,476.5 mm and electrodes disposed around the drum and spaced in a range of 5 mm apart. Into the electrolytic bath were introduced copper with the concentration of 90 g/L, sulfuric acid with the concentration of 80 g/L, further an additive of bis(3-sulfopropyl) disulfide with the concentration of 30 ppm, an amine compound with a specific skeleton obtained by addition reaction of a compound having not less than 1 epoxy group in a molecule with an amine compound with the concentration of 30 ppm, diethylurea with the concentration of 5 ppm, and a chloride ion with the concentration of 60 ppm to form an electrolyte. Then, the electrolyte temperature and a current density were adjusted to 53°C and 60 A/dm², respectively, to deposit copper on the surface of the rotating drum, from which copper was pealed to continuously produce an electrolytic copper foil with the thickness of 10 µm.

### (Comparative Example 2)

In the electrolytic bath were placed the rotating drum made of titanium with the diameter of approximately 3,133 mm and the width of 2,476.5 mm and electrodes disposed around the drum and spaced in a range of 5 mm apart. Into the electrolytic bath were introduced copper with the concentration of 90 g/L and sulfuric acid with the concentration of 80 g/L to form an electrolyte. Then, the electrolyte temperature and a current density were adjusted to 53°C and 60 A/dm², respectively, to deposit copper on the surface of the rotating drum, from which copper was pealed to continuously produce the electrolytic copper foil with the thickness of 10 µm.

### (Comparative Example 3)

In the electrolytic bath were placed the rotating drum made of titanium with the diameter of approximately 3,133 mm and the width of 2,476.5 mm and electrodes disposed around the drum and spaced in a range of 5 mm apart. Into the electrolytic bath were introduced copper with the concentration of 90 g/L, sulfuric acid with the concentration of 80 g/L, further an additive of bis(3-sulfopropyl) disulfide with the concentration of 30 ppm, an amine compound with a specific skeleton obtained by addition reaction of a compound having not less than 1 epoxy group in a molecule with an amine compound with the concentration of 30 ppm, and a chloride ion with the concentration of 60 ppm to form an electrolyte. Then, the electrolyte temperature and a current density were adjusted to 53°C and 60 A/dm², respectively, to deposit copper on the surface of the rotating drum, from which copper was pealed to continuously produce the electrolytic copper foil with the thickness of 10 µm.

### -Characteristics evaluation method-

### <Combustion analysis of sulfur and other impurities in a copper foil>

Electrolytic copper foils in Example 1 and Comparative Examples 1 to 3 were analyzed specifically by the inert gas fusion thermal conductivity method with TC-436 (made by LECO Corp.) for nitrogen, the combustion infrared absorption spectrometry with CS-400 (made by LECO Corp.) for sulfur, and the ion chromatography of hot water hydrolysate with DX-500 (made by Nippon Dionex KK) for chlorine.

### <Sulfur concentration at intersections of lattices in copper foil observed by STEM analysis>

As a scanning transmission electron microscope (STEM), JEM-2100F manufactured by JEOL Ltd. was used, and electrolytic copper foils in Example 1 and Comparative Example 1 to 3 were processed using focused ion beam (FIB) in the thickness direction of a copper foil to form a thin sample (thickness: approximately 0.1 µm, width: 30 µm, and length: 10 µm) as a test specimen for observation with STEM. The test specimen for observation with STEM was configured such that the plane in the direction of thickness (thickness: approximately 0.1 µm) is nearly vertical to an incoming electron beam, and observation with the STEM and analysis of an image were carried out.

A STEM image obtained by observing the test specimen of electrolytic copper foils in Example 1 and Comparative Examples 1 to 3 was defined by drawing a straight line in both x-axis and y-axis directions (longitudinal and transverse directions) at a spacing of 10 nm to form lattices, of which intersections were used as a measurement point for determining the sulfur concentration. When there were locally deposited sites (singularity) of impurities in the area analysis in advance, lattices were formed such that the sites thereof correspond to the measurement point.

### (Determination of tensile strength in normal conditions and tensile strength after a heat history)

The tensile test according to IPC-TM-650 was carried out for electrolytic copper foils in Example 1 and Comparative Examples 1 to 3 in normal conditions (23°C) and electrolytic copper foils in Example 1 and Comparative Examples 1 to 3 after heated at 250°C for 30 minutes, respectively. The results are shown in Table 1.

### <Elongation>

The elongation test according to IPC-TM-650 was carried out for electrolytic copper foils in Example 1 and Comparative Examples 1 to 3. The results are shown in Table 1.

**[Table 1]**

| | | C | N | O | S | Cl | Cu | Tensile strength in normal condition | Tensile strength after heating | Elongation |
|---|---|---|---|---|---|---|---|---|---|---|
| | | | | | | | | (kgf/mm²) | (kgf/mm²) | (%) |
| Example 1 | STEM (%) | 2.00 | 0.00 | 0.61 | 0.70 | 0.04 | 96.66 | 57 | 52 | 7.2 |
| | Combustion analysis (ppm) | - | 5 | - | 23 | 10 | - | | | |
| Comparative Example 1 | STEM (%) | 3.40 | 1.80 | 0.06 | 0.80 | 2.30 | 91.64 | 75 | 65 | 3.5 |
| | Combustion analysis (ppm) | - | 25 | - | 190 | 160 | - | | | |
| Comparative Example 2 | STEM (%) | - | - | - | - | - | - | 53 | 25 | 7.3 |
| | Combustion analysis (ppm) | - | 1 | - | 2 | 8 | - | | | |
| Comparative Example 3 | STEM (%) | - | - | - | - | - | - | 35 | 30 | 10.5 |
| | Combustion analysis (ppm) | - | 5 | - | 15 | 10 | - | | | |

The electrolytic copper foil in Example 1 shows low sulfur concentration at no more than 50 ppm by mass in the combustion analysis and has, in determination of the sulfur concentration by the STEM analysis, the measurement points (singularity) at which the sulfur concentration is 0.7% by mass, the value being higher as compared to the sulfur concentration of a copper foil. As the results, tensile strength in normal conditions is high and retains not less than 90% of tensile strength in normal conditions after heating. Elongation is also higher as compared to Comparative Example 1.

In Comparative Example 1, STEM analysis of the sulfur concentration indicates that there are measurement points (singularity) exhibiting higher sulfur concentration than the sulfur concentration obtained in the combustion analysis, but while tensile strength in normal conditions is high, elongation is low at 3.5% since the sulfur concentration in a copper foil is as high as 190 ppm by mass. Since the sulfur concentration in the copper foil is too high, elongation is as low as 3.5% and does not meet the condition of the present invention. Retention of tensile strength in normal conditions is no more than 90% after heating and does not meet the proper condition of the present invention. This may be due to little effects of singularity making the sulfur concentration lower in a matrix even though there is singularity.

In Comparative Example 2, the sulfur concentration is low in the combustion analysis and there is no measurement point (singularity) at which the sulfur concentration is higher than the sulfur concentration in the copper foil obtained by the combustion analysis. As the results, elongation is relatively high, but variation of tensile strength before and after a heat history is large, and retention of tensile strength in normal conditions is no more than 90% after heating and does not meet a proper condition of the present invention.

In Comparative Example 3, the sulfur concentration is low in the combustion analysis and elongation is relatively high, but tensile strength in normal conditions is 35 kgf/mm², the value being no more than 50 kgf/mm². In determination of the sulfur concentration by STEM analysis, there is no measurement point (singularity) at which the sulfur concentration is higher than the sulfur concentration in a copper foil obtained by the combustion analysis, and the characteristics thereof does not meet a proper condition of the present invention. In Comparative Example 3, it is considered that the sulfur concentration is low and elongation is high, but there is no singularity resulting in low tensile strength (in normal conditions and after heating).

## Claims

1. An electrolytic copper foil in which a sulfur concentration of the copper foil is not less than 10 ppm by mass but no more than 50 ppm by mass,
wherein when lattices with a spacing of 10 nm in a STEM image observed with a scanning transmission electron microscope at a magnification of 1 million times are formed and intersections of each lattice are used as a measurement point for determining a sulfur concentration, there is a measurement point at which the sulfur concentration is higher as compared to the sulfur concentration of the copper foil.

2. An electrolytic copper foil in which a sulfur concentration of the copper foil is not less than 10 ppm by mass but no more than 50 ppm by mass,
wherein when lattices with a spacing of 10 nm in a STEM image observed with a scanning transmission electron microscope at a magnification of 1 million times are formed and intersections of each lattice are used as a measurement point for determining a sulfur concentration, there is a measurement point at which the sulfur concentration is not less than 10 times as compared to the sulfur concentration of the copper foil.

3. The electrolytic copper foil of claim 1 or 2, wherein a tensile strength in normal conditions is not less than 50kgf/mm² and the electrolytic copper foil retains tensile strength not less than 90% of tensile strength in normal conditions after heated at 250°C for 30 minutes.

4. The electrolytic copper foil of any one of claims 1-3, wherein an elongation of the electrolytic copper foil is not less than 5.0%.

5. The electrolytic copper foil of any one of claims 1-4, wherein the electrolytic copper foil comprises a copper foil used for an anode current collector of a secondary battery.

6. A method of producing the electrolytic copper foil of any one of claims 1-5, the method comprising using an electrolyte containing 2 to 5 ppm by mass of a glue and whose sulfur concentration is adjusted so that sulfur concentration in the copper foil is not less than 10 ppm by mass but no more than 50 ppm by mass and electrolyzing the electrolyte at an electrolytic temperature between 60 and 65°C and a current density between 60 and 120 A/dm².
